# EUROPEAN PATENT APPLICATION

(11) **EP 2 996 081 A1**
(43) Date of publication of application: **16.03.2016**
(21) Application number: 15172627.0
(22) Date of filing: 18.06.2015
(51) Int. Cl.: G06Q 30/00, G09F 9/35, G09G 3/00

(54) **ELECTRONIC INFORMATION LABEL WITH IMPROVED PRODUCT PROMOTION FUNCTION**

(30) Priority: 10.09.2014 KR 20140119619
(71) Applicant: Samsung Electro-Mechanics Co., Ltd., Gyeonggi-do (KR)
(72) Inventor: HWANG, Ki Han, Gyeonggi-do (KR)
(74) Representative: Grünecker Patent- und Rechtsanwälte PartG mbB

(57) **Abstract**

Disclosed is an electronic information label that electronically shows information of products displayed in a store. The electronic label includes an upper housing, a lower housing, a first electronic paper panel where product information is displayed, a second electronic paper panel that is implemented in a display with the first electronic paper panel, and a printed circuit board on which electrical components are mounted. By implementing two electronic paper panels in one display, space may be used more efficiently. Further, by controlling two displays with one controller, production costs may be reduced.

## Description

### CROSS-REFERENCE TO RELATED APPLICATION(S)

This application claims priority from Korean Patent Application No. 10-2014-0119619, filed on September 10, 2014, in the Korean Intellectual Property Office, the entire disclosure of which is incorporated herein by reference for all purposes.

### BACKGROUND

### 1. Field

The following description generally relates to techniques for electronic information labels that electronically show information on products displayed in a store.

### 2. Description of the Related Art

Paper labels attached to store shelves are inefficient in that the labels are required to be changed every time product prices are changed. As a substitute for the paper label, an electronic information label (EIL, hereinafter referred to as an electronic label) that electronically shows product information is known. The electronic label communicates with a management server through a gateway. These electronic labels that are managed through an identical gateway may form a group, and all the electronic information labels are separated into these groups, for each of which product information is updated. In order to reduce power consumption of electronic labels that are battery-powered, electronic labels go into a sleep mode except for the period when they are awake, i.e. 'the wake-up period', which is required for information updates. Electronic paper displays (EPDs) are used so that the electronic labels may display information even without a power supply. The EPD is made in such a manner that polysilicon is deposited on a glass or plastic substrate to form a TFT array, around which a driving circuit that drives the rows and columns of the TFT array is formed on a driving chip formed by recrystallization. A bezel area is formed on the EPD so as not to expose the driving circuit, and an opaque sheet is attached to the bezel area to cover the driving circuit. However, such bezel area limits a display area and designs.

Further, the electronic label may display promotions by blinking at a specific area, such as a part or an edge of a display area.

Moreover, a display state is required to be changed periodically to enable blinking at a specific area of the display, thereby continuously consuming power.

### SUMMARY

In the present disclosure, a display area may be secured to be as wide as possible. Further, a bezel area may be used efficiently with enhanced design flexibility.

The present disclosure provides an electronic label that may display promotion information.

The present disclosure provides an electronic label that may be minimized by maximizing use of space of the electronic label.

In one general aspect, there is provided an electronic label that includes an additional electronic paper panel disposed in an area that is a top portion of an edge where a driving chip of the electronic paper panel is formed and that is a bezel area of the electronic label.

An electronic pattern, which is formed on one end of a flexible circuit board that is used to connect the additional electronic paper panel to a main substrate, may form a driving electrode. The electronic label may include a signal amplifier that controls a second electronic paper panel to blink according to a control signal.

The electronic label may include a blinking driver that continues to output a blinking drive signal independently to the second electronic paper panel even when a main control chip is in a sleep mode.

The blinking driver may include: a chip interface configured to interface with a wireless System on Chip; a timer configured to generate an event at regular intervals; and a pulse driver configured to generate a blinking drive pulse.

### BRIEF DESCRIPTION OF THE DRAWINGS

FIG. 1 is a schematic diagram of an entire electronic label management system according to an exemplary embodiment.
FIG. 2 is a cross-sectional diagram illustrating an electronic label according to an exemplary embodiment.
FIG. 3 is a plane diagram illustrating some of the components illustrated in FIG. 2 according to an exemplary embodiment.
FIG. 4 is a plane diagram illustrating an electronic label according to an exemplary embodiment.
FIG. 5 is diagram illustrating a second flexible circuit board and a display electrode formed thereon.
FIG. 6 is a block diagram illustrating an electronic label according to an exemplary embodiment.
FIG. 7 is a block diagram illustrating an electronic label according to another exemplary embodiment.
FIG. 8 is a perspective diagram illustrating an exploded view of an electronic label according to another exemplary embodiment.
FIG. 9 is a plane diagram illustrating the exploded view illustrated in FIG. 8.
FIG. 10 is a detailed block diagram illustrating the electronic label illustrated in FIG. 7.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

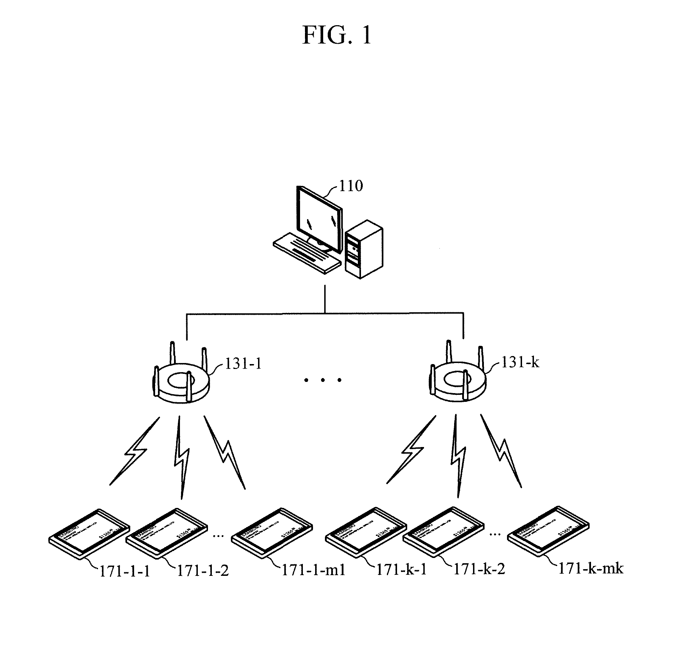

FIG. 1 is a schematic diagram of an entire electronic label management system according to an exemplary embodiment. As illustrated in FIG. 1, an electronic label management system 110 includes a management server 110, gateways 131-1, ... , and 131-k, and electronic labels 171-1-1, 171-1-2, ..., 171-1-1m, ..., 171-k-1, 171-k-2, ..., and 171-k-mk. In the exemplary embodiment, the management server 110 provides product information to be displayed on the electronic labels 171-1-1, 171-1-2, ..., 171-1-1m, ..., 171-k-1, 171-k-2, ..., and 171-k-mk, in which the information may, for example, include product names and prices, expiration dates, and the like. The gateways 131-1, ... , and 131-k may be wired-to-wireless converters and may be installed on the ceiling in a store.

In the exemplary embodiment, the electronic labels may form a group to be managed as at least one or more groups, and product information is updated for each group. The electronic labels remain in a sleep mode to save battery power, and they are woken up only when it is required to update product information. In the electronic label management system, the management server 110 and the gateways communicate with each other according to protocols defined on a PHY/MAC layer in accordance with near field wireless communication, for example, IEEE 802.15.4 standards. The management server 110 transmits, through the gateways, product information to the electronic labels that are managed as at least one or more groups.

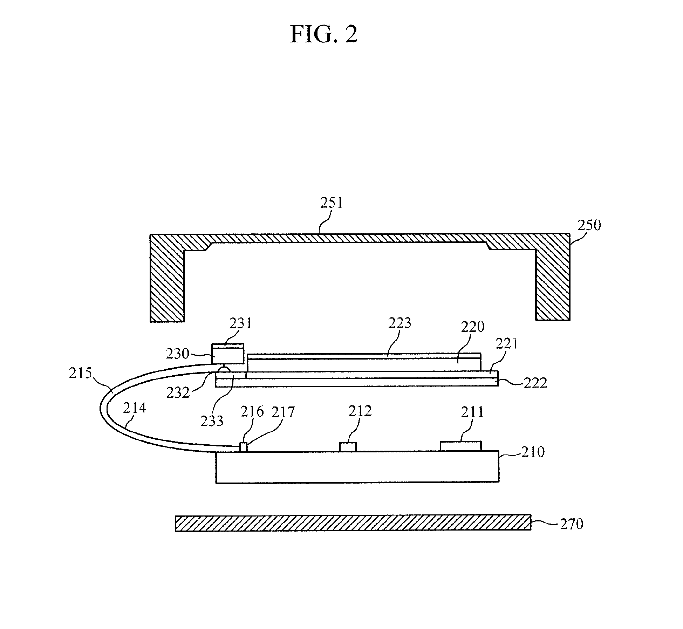

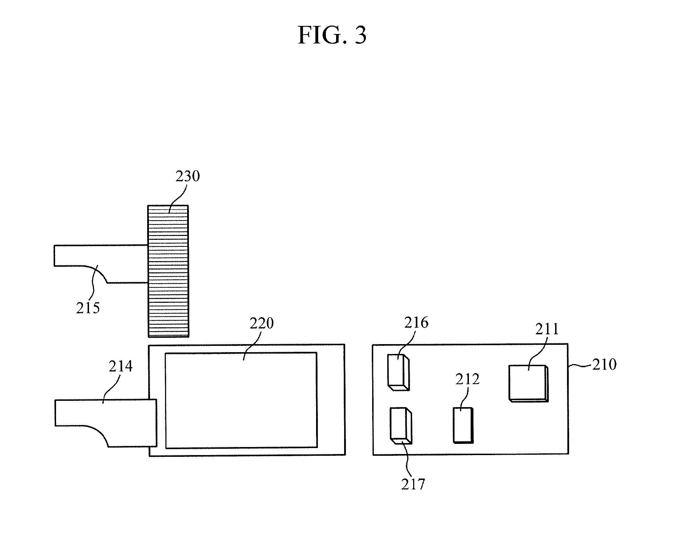

FIG. 2 is a cross-sectional diagram illustrating an electronic label according to an exemplary embodiment. FIG. 3 is a plane diagram illustrating some of the components illustrated in FIG. 2 according to an exemplary embodiment. The electronic label includes an upper housing 250, a lower housing 270, a first electronic paper panel 220, a second electronic paper panel 230, and a printed circuit board 210. In the exemplary embodiment, the upper housing 250 is transparent and includes a window 251 where product information is displayed. The lower housing 270 is engaged with the upper housing 250. The upper and lower housings are formed as a box to accommodate components and to encase all the electronic devices such as a frame in which equipment is installed. The window 251 is display area where product information is displayed, and may be an area that is thinly formed with a terminal included on the inner surface of the upper housing 250. In the exemplary embodiment, the left side of the window 251 is extended to the second electronic paper panel 230. However, the window 251 is not limited thereto, and may be formed in proportion to the size of an effective display surface of the first electronic paper panel 220.

In the exemplary embodiment, the first electronic paper panel 220 is provided in such a manner that the effective display surface of the first electronic paper panel 220 may be exposed on the window.

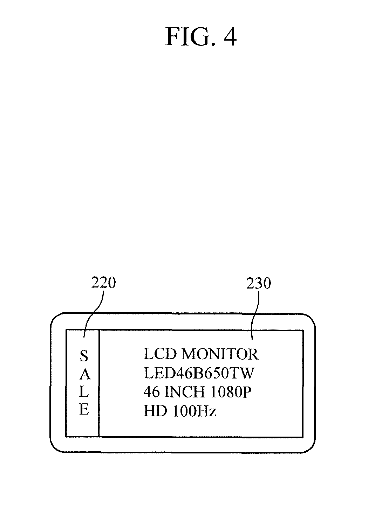

FIG. 4 is a plane diagram illustrating an electronic label according to an exemplary embodiment. As illustrated in FIG. 4, product information, such as a name, a place of origin, weight, and the like, is displayed on the effective display surface of the first electronic paper panel 220. Examples of the electronic paper display may include a twist ball type by Xerox Corporation utilizing an electrostatically charged hemi-spherical twist ball, an electrophoresis panel by E Ink Corporation utilizing an electrophoresis method and a microcapsule, or an electronic paper of a cholesterol liquid crystal by Kent Displays, Inc. utilizing cholesterol liquid crystal.

The electronic paper display may include: a TFT substrate 221 having a thin film transistor (TFT) formed on a polysilicon layer that is deposited on a plastic substrate; a transparent electrode substrate; and a microcapsule layer sealed between the TFT substrate and the transparent electrode substrate. The electronic paper display may include a CMOS circuit formed by recrystallizing edges of the TFT substrate 221. The transparent electrode placed on the upper portion of the first electronic paper panel 220 is generally made of Indium Tin Oxide (ITO) which is made by solidifying Sn02 in In203. The ITO is an oxide that is stable at room temperature, and has light transmission properties in a visible ray range and light reflection properties in an infrared ray range, and has low electrical resistance. The electronic paper display is operated at a voltage that is higher than a predetermined level and consumes minimal power while displaying.

In the exemplary embodiment, the second electronic paper panel 230 is disposed in an area, which is a top portion of an edge where a driving chip of the electronic paper panel is formed and which is a bezel area of the electronic label. By referring to FIG. 4, promotion information such as "SALE" is displayed by blinking on the second electronic paper panel 230. Examples of the electronic paper display may include a twist ball type by Xerox Corporation utilizing an electrostatically charged hemi-spherical twist ball, an electrophoresis panel by E Ink Corporation utilizing an electrophoresis method and a microcapsule, or an electronic paper of a cholesterol liquid crystal by Kent Displays, Inc. utilizing cholesterol liquid crystal. The electronic paper display is operated at a voltage that is higher than a predetermined level and consumes minimal power while displaying. In the exemplary embodiment, a substrate 222 of the first electronic paper panel 220 and a CMOS circuit 233 are formed on the bottom of the second electronic paper panel 230, in which the substrate 222 may be made of a glass or plastic material, and the CMOS circuit 233 may be integrated at the edge of the electronic paper display substrate. The electronic paper display substrate is formed on polysilicon that has low crystallinity, and the CMOS circuit 233 that includes a driving circuit, such as an amplifier, may be manufactured through an additional process after increasing crystallinity by recrystallizing polysilicon.

A transparent electrode is provided on the upper surface of the second electronic paper panel 230. As the second electronic paper panel 230 is disposed in a bezel area, space may be used more efficiently.

In the exemplary embodiment, the printed circuit board 210 includes a first driver 212 that drives the first electronic paper panel 220 and the second electronic paper panel 230 by being connected therewith. Further, a wireless System on Chip (SoC) 211 is mounted on the printed circuit board 210 to control the entire operation of a device.

The wireless System on Chip (SoC) 211 is used for wireless communications of electronic labels. The SoC 211 includes not only a communicator that processes wireless communications, but also a processor, a memory, and a timer. The processor operates as a main controller that controls the entire operation of the device. The timer operates even when the processor is in a sleep mode, and generates an interrupt signal at regular intervals determined by the processor to wake up the processor. The wake-up time slot may be determined in a manner that does not cause a conflict between electronic labels.

In the exemplary embodiment, the first driver 212 scans the rows and columns of the electronic paper panel. The first driver 212 interfaces with the wireless SoC 211 to control the electronic paper panel. Once product information to be displayed is received from the communicator during a wake-up period by the control of the processor, the processor controls the first driver 212 to display the received product information on the electronic paper panel. The first driver 212 is operated by a gate line and a data line. In the exemplary embodiment, the first driver 212 may be a display control circuit that outputs display data signals to the gate line and the data line. The first driver 212 communicates with the processor via a serial interface and receives display data, e.g., image frames, from the processor.

By referring to FIGS. 2 and 3, the electronic label includes an upper housing 250 made of a transparent material and a lower housing 270 that is engaged with the upper housing 250 to seal the inner components. Further, the electronic label includes: a printed circuit board 210 where circuit components necessary for wireless communications and for device control are mounted; a first electronic paper panel 220 that is electrically connected by a first flexible circuit board 214 to a connector 217 of the printed circuit board 210; and a second electronic paper panel 230 that is electrically connected to a connector 216 by a second flexible circuit board 215. After being connected to the connector 217, the first electronic paper panel 220 is coupled so that the first electronic paper panel 220 and the printed circuit board 210 may overlap with each other. The first flexible circuit board 214 is connected to a bonding pad 232 that is connected to a driving circuit among CMOS circuits formed at one edge of the first electronic paper display.

The second electronic paper panel 230 is provided with driving signals from the second flexible circuit board 215. In the exemplary embodiment, the second electronic paper panel 230 is a segment display. Transparent electrodes are provided on the first electronic paper panel 220 and the second electronic paper panel 230.

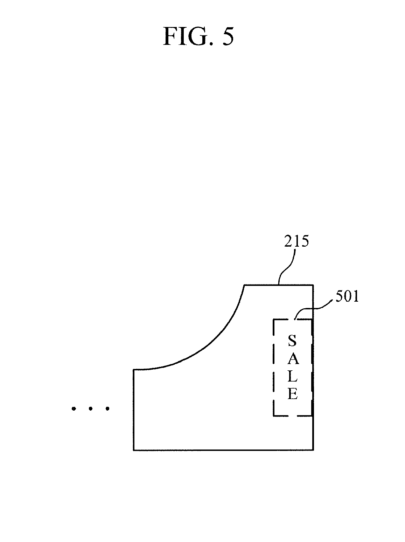

FIG. 5 is diagram illustrating a second flexible circuit board and a display electrode formed thereon. The second flexible circuit board 215 includes a display electrode 501. In the exemplary embodiment, the display electrode 501 may have one end that is attached to the bottom surface of the second electronic paper panel 230 to operate as a driving electrode, and have a top surface on which a conductive pattern is formed as a promotion phrase. The conductive pattern forms an electrode pattern of a segment display. By referring to FIG. 5, a conductive pattern of "SALE" is displayed on the display electrode 501, but other promotion phrases may also be formed. Space may be used more efficiently by cutting and assembling the second electronic paper panel 230 on the second flexible circuit board 215 where a promotion phrase is printed; and by providing the second flexible circuit board 215 on a driving chip 232 of the first electronic paper panel 220.

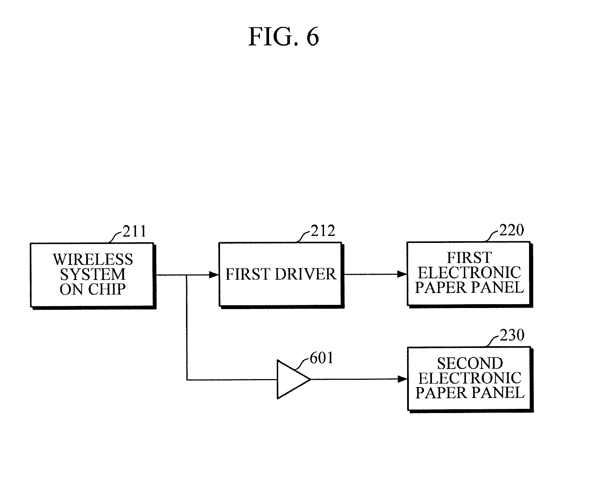

FIG. 6 is a block diagram illustrating an electronic label according to an exemplary embodiment. The electronic label includes a signal amplifier 601. The signal amplifier 601 is connected to an output port, e.g., a general-purpose I/O (GPIO) port, of the wireless SoC 211 to control the second electronic paper panel 230 to blink according to the control signal. For example, the second electronic paper panel 230 may be controlled to blink in black and white. The signal amplifier 601 may be mounted on a circuit pattern of the second flexible circuit board. The blinking period may be set by a manager and may be received by the processor through the communicator during a wake-up period. Colored blinking may be allowed by further providing, on the upper portion of the second electronic paper panel 230, a sheet having a color area.

In another exemplary embodiment, a fixed display pattern, such as "SALE", may blink on a fixed display area of the second electronic paper display. A blinking pulse is applied only to a display pattern portion, and a background portion is refreshed. The blinking period may be set by a manager and may be received by the wireless SoC 211 from a management server during a wake-up period. Colored character blinking may be allowed by further providing, on the upper portion of the second electronic paper panel 230, a sheet having a color area arranged in a character display area to display colors and other areas that are transparent. The signal amplifier 601 amplifies output of the wireless SoC 211 at an appropriate level.

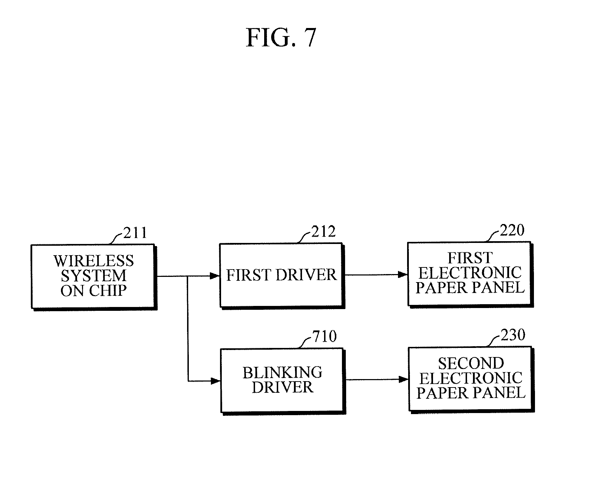

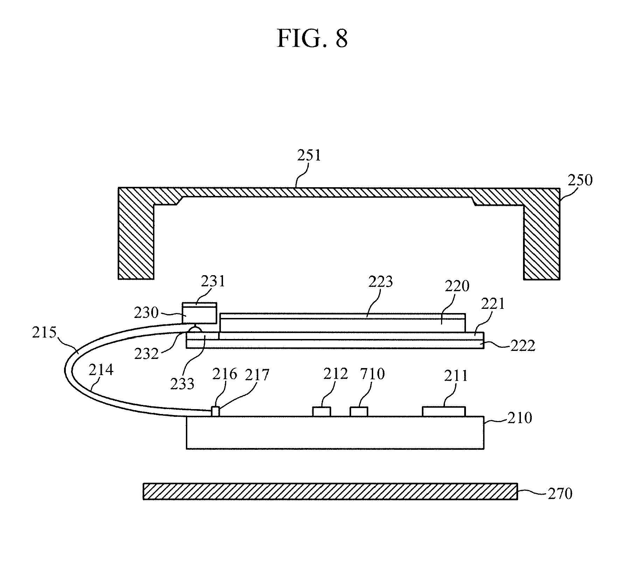

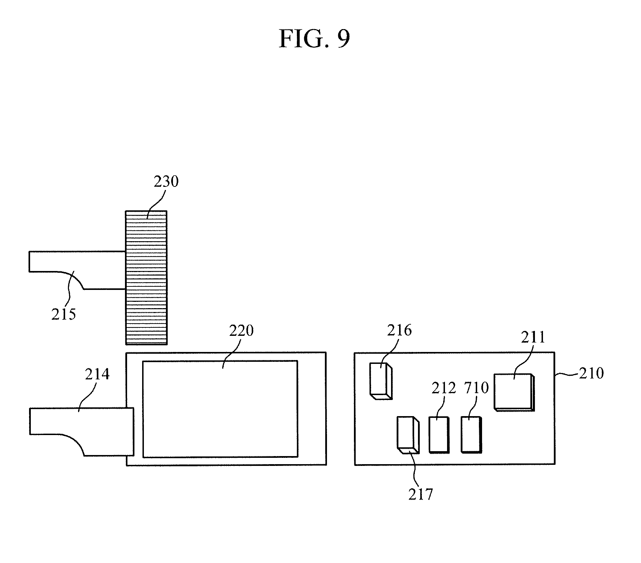

FIG. 7 is a block diagram illustrating an electronic label according to another exemplary embodiment. FIG. 8 is a perspective diagram illustrating an exploded view of an electronic label according to another exemplary embodiment. FIG. 9 is a plane diagram illustrating the exploded view illustrated in FIG. 8. The electronic label may include a blinking driver 710. The blinking driver 710 interfaces with the wireless SoC 211 to output a driving signal to the second electronic paper panel 230 for blinking at regular intervals according to a control signal, in which even when the wireless SoC 211 is in a sleep mode, the blinking driver 710 may continue to output the driving signal independently. In order to reduce power consumption of electronic labels that are battery-powered, the electronic labels remain in a sleep mode except for a wake-up period required for information updates. Even when the electronic labels are in a sleep mode with no power supplied to the electronic paper display, information that has been displayed may be maintained, thereby reducing power consumption of the electronic labels. When the wireless SoC 211 is in a sleep mode, the first electronic display panel 220 maintains product information that has been displayed. Even when the wireless SoC 211 is in a sleep mode, the blinking driver 710 outputs a driving signal at a predetermined interval, such that the second electronic paper panel 240 may blink at a low power. The blinking period may be set by a manager and may be received by the wireless SoC 211 during a wake-up period to be transmitted to the blinking driver 710. The blinking driver 710 is provided as a separate component on the outside of the wireless SoC 211. The blinking driver 710 is implemented in simple hardware to consume minimal power. In another example, the first driver 212 and the blinking driver 710 may be implemented in a single semiconductor chip.

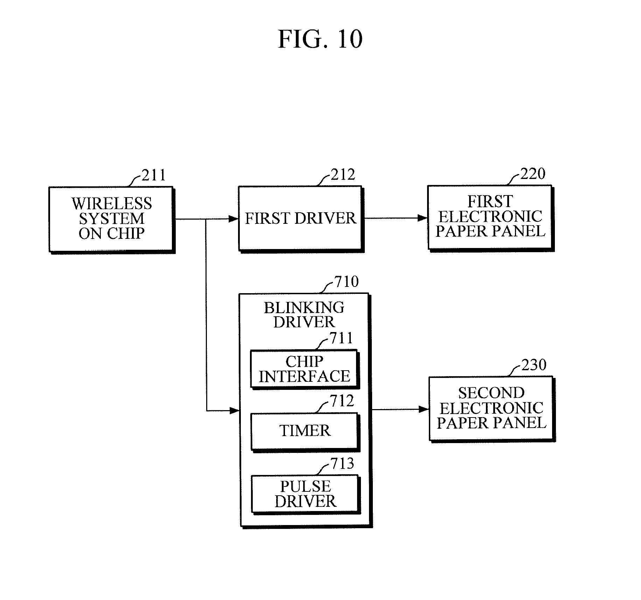

FIG. 10 is a detailed block diagram illustrating the electronic label illustrated in FIG. 7. In the exemplary embodiment, the blinking driver 710 includes a timer 712 and a pulse driver 713.

The chip interface 711 interfaces with the wireless SoC 211. For example, the chip interface 711 may be a Serial Peripheral Interface (SI).

In the exemplary embodiment, the timer generates events at regular intervals according to a period value received from the chip interface 711. Even when a processor of the wireless SoC 211 is in a sleep mode, the timer 712 operates to generate an event at a predetermined interval. As the timer 712 operates even when a processor of the wireless system control chip 211 is in a sleep mode, the second electronic paper panel 230 may blink at a low power.

In the exemplary embodiment, while waiting in a sleep mode, the pulse driver 713 wakes up in response to an event generated by the timer 712 to generate a blinking drive pulse at regular intervals. The time 712 operates even when a processor of the wireless SoC 211 is in a sleep mode and generates an interrupt signal at regular intervals predetermined by the processor of the wireless SoC 211 to wake up the pulse driver 713. The wake-up time slot may be determined by an electronic label management server.

In the present disclosure, promotion information may be displayed in a bezel area, and two electronic paper panels may be implemented in a display device for better use of space. Moreover, promotion information may be displayed even when electronic labels are in a sleep mode.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An electronic label, comprising:
an upper housing configured to comprise a window where product information is displayed and to be made of a transparent material;
a lower housing that is engaged with the upper housing;
a first electronic paper panel that is provided so that an effective display surface of the first electronic paper panel is exposed on the window;
a second electronic paper panel that is disposed in an area, which is a top portion of an edge where a driving chip of the electronic paper panel is formed, and which is a bezel area of the electronic label; and
a printed circuit board, to which the first electronic paper panel is connected by a first flexible circuit board and the second electronic paper panel is connected by a second flexible circuit board, and on which a wireless System on Chip (SoC)is mounted to drive a first driver that drives the first electronic paper panel and to control an entire operation of a device.

2. The electronic label of claim 1, wherein the second flexible circuit board comprises a display electrode, which has one end that is attached to a bottom surface of the second electronic paper panel to operate as a driving electrode, and which has a top surface on which conductive pattern is formed as a promotion phrase.

3. The electronic label of claim 2, further comprising a signal amplifier configured to be connected to an output port of the wireless SoC to control the second electronic paper panel to blink according to a control signal.

4. The electronic label of claim 2, further comprising a blinking driver configured to interface with the wireless SoC to output a driving signal to the second electronic paper panel to control the second electronic paper panel to blink at regular intervals according to the control signal,
wherein the blinking driver continues to output the driving signal independently even when the wireless SoC is in a sleep mode.

5. The electronic label of claim 4, wherein the blinking driver comprises:
a chip interface configured to interface with the wireless SoC;
a timer configured to generate an event at regular intervals according to a period value received via the chip interface; and
a pulse driver, which while waiting in a sleep mode, wakes up in response to the event generated by the timer to generate a blinking drive pulse at regular intervals.
